(19) Europäisches Patentamt
European Patent Office
Office européen des brevets

(11) **EP 3 014 297 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **14724426.3**

(22) Anmeldetag: **14.05.2014**

(51) Int Cl.:
*G01S 13/42* *(2006.01)*     *G01S 13/93* *(2020.01)*
*H01Q 3/24* *(2006.01)*     *H01Q 21/22* *(2006.01)*

(86) Internationale Anmeldenummer:
**PCT/EP2014/059851**

(87) Internationale Veröffentlichungsnummer:
**WO 2014/206630 (31.12.2014 Gazette 2014/53)**

(54) **WINKELAUFLÖSENDER FMCW-RADARSENSOR**

ANGLE-RESOLVING FMCW RADAR SENSOR

DÉTECTEUR À RADAR FMCW À RÉSOLUTION ANGULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2013 DE 102013212090**

(43) Veröffentlichungstag der Anmeldung:
**04.05.2016 Patentblatt 2016/18**

(73) Patentinhaber: **Robert Bosch GmbH**
**70442 Stuttgart (DE)**

(72) Erfinder: **SCHOOR, Michael**
**70195 Stuttgart (DE)**

(56) Entgegenhaltungen:
**EP-A1- 2 060 929     EP-A2- 1 486 796**
**WO-A1-2012/041652**

**Beschreibung**

Die Erfindung betrifft einen winkelauflösenden FMCW-Radarsensor, insbesondere für Kraftfahrzeuge, mit mehreren Antennenelementen, die in einer Richtung, in welcher der Radarsensor winkelauflösend ist, in verschiedenen Positionen angeordnet sind und mindestens drei Sendearrays sowie mindestens ein Empfangsarray bilden, und mit einer Steuer- und Auswerteeinrichtung, die für eine Betriebsweise ausgelegt ist, bei der die mindestens drei Sendearrays periodisch Signale senden deren Frequenz gemäß einer Folge von Modulationsrampen moduliert ist, und bei der Radarechos der gesendeten Signale jeweils von mehreren Antennenelementen des mindestens einen Empfangsarrays empfangen werden und der Winkel eines georteten Objekts anhand von Amplituden- und/oder Phasenbeziehungen zwischen Radarechos bestimmt wird, die unterschiedlichen Kombinationen von Sende- und Empfangsarrays entsprechen.

Radarsensoren dieser Art sind aus WO 2012/041652 A1, EP 2 060 929 A1 und EP 1 486 796 A2 bekannt.

Radarsensoren werden in Kraftfahrzeugen beispielsweise zur Messung der Abstände, Relativgeschwindigkeiten und Azimutwinkel von im Vorfeld des eigenen Fahrzeugs georteten Fahrzeugen oder sonstigen Objekten eingesetzt. Die einzelnen Antennenelemente sind dann beispielsweise in Abstand zueinander auf einer Horizontalen angeordnet, so dass unterschiedliche Azimutwinkel der georteten Objekte zu Differenzen in den Lauflängen führen, die die Radarsignale vom Objekt bis zum jeweiligen Antennenelement zurückzulegen haben. Diese Lauflängendifferenzen führen zu entsprechenden Unterschieden in der Phase der Signale, die von den Antennenelementen empfangen und in den zugehörigen Auswertungskanälen ausgewertet werden. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des georteten Objekts bestimmen.

Damit eine hohe Winkelauflösung erreicht wird, sollte die Apertur der Antenne möglichst groß sein. Wenn jedoch die Abstände zwischen den benachbarten Antennenelementen zu groß sind, können Mehrdeutigkeiten in der Winkelmessung auftreten, da man für Lauflängendifferenzen, die sich um ganzzahlige Vielfache der Wellenlänge $\lambda$ unterscheiden, dieselben Phasenbeziehungen zwischen den empfangenen Signalen erhält. Eine eindeutige Winkelmessung lässt sich beispielsweise mit einer ULA-Struktur (Uniform Linear Array) erreichen, bei der die Antennenelemente in Abständen von $\lambda/2$ angeordnet sind. In diesem Fall nimmt jedoch mit zunehmender Apertur auch die Anzahl der Antennenelemente und damit auch die Anzahl der erforderlichen Auswertungskanäle zu, so dass entsprechend hohe Hardwarekosten entstehen.

Bei einem MIMO-Radar (Multiple Input / Multiple Output) wird ein größeres Winkelauflösungsvermögen dadurch erreicht, dass man nicht nur mit mehreren empfangenden Antennenelementen arbeitet, sondern auch mit mehreren sendenden Antennenelementen, wobei unterschiedliche Kombinationen von sendenden und empfangenden Antennenelementen ausgewertet werden, beispielsweise im Zeitmultiplex oder wahlweise auch im Frequenzmultiplex oder Codemultiplex. Die variierenden Positionen der sendenden Antennenelemente führen dann zu zusätzlichen Phasendifferenzen und damit zu Signalen, die äquivalent sind zu Signalen, die man mit einer Konfiguration mit einem einzelnen sendenden Antennenelement und zusätzlichen (virtuellen) empfangenden Antennenelementen erhalten würde. Auf diese Weise wird die Apertur virtuell vergrößert und damit die Winkelauflösung verbessert.

Im Hinblick auf eine möglichst hohe Winkelauflösung ist es dabei vorteilhaft, wenn das virtuelle Antennenarray so ausgedünnt ist, dass die einzelnen Antennenelemente relativ große Abstände zueinander haben. Unter diesen Umständen ist jedoch die Eindeutigkeitsbedingung nicht mehr erfüllt, so dass es insbesondere bei verrauschten Radarechos zu Mehrdeutigkeiten und damit zu "springenden" Winkelmessungen kommt, d.h., wenn ein Radarziel über einen längeren Zeitraum verfolgt wird, kommt es gelegentlich zu sprunghaften Änderungen des gemessenen Azimutwinkels.

Bei einem FMCW-Radarsensor (Frequency Modulated Continuous Wave) wird die Sendefrequenz eines kontinuierlichen Radarsignals rampenförmig moduliert. Aus einem Empfangssignal wird durch Mischen mit dem Sendesignal ein Basisbandsignal erzeugt, welches dann ausgewertet wird.

Jedes Radarobjekt zeichnet sich dann im Frequenzspektrum des Basisbandsignals in der Form eines Peaks ab, dessen Lage von der Dopplerverschiebung und der Laufzeit der Radarsignale abhängig ist, so dass das aus dem einer einzelnen Frequenzmodulationsrampe gewonnene Basisbandsignal noch keine eindeutige Bestimmung der Relativgeschwindigkeit und des Abstands erlaubt. Vielmehr legt die Frequenz eines erhaltenen Peaks nur eine Beziehung zwischen der Geschwindigkeit (Relativgeschwindigkeit) und dem Abstand in Form eines linearen Zusammenhangs fest. (Der Begriff "linear" wird hier so verstanden, dass der dadurch bezeichnete Zusammenhang einen linearen Faktor und einen additiven Term umfassen kann.)

Beim FMCW-Verfahren sind zur Identifizierung mehrerer Radarobjekte und Schätzung ihrer Relativgeschwindigkeiten und Abstände mehrere Frequenzmodulationsrampen mit unterschiedlichen Rampensteigungen erforderlich. Durch Abgleichen der unterschiedlichen, bei den einzelnen Frequenzrampen erhaltenen Beziehungen können die Relativgeschwindigkeit V und der Abstand D eines Radarobjektes berechnet werden. Dieser Abgleich wird auch als Matching bezeichnet und entspricht einer Suche von Schnittpunkten von Geraden im D-V-Raum. Das FMCW-Verfahren ist besonders effizient, wenn nur wenige Radarobjekte erfasst werden.

Es sind auch Radarsensoren bekannt, die nach dem Verfahren der Chirp-Sequence-Modulation arbeiten, bei dem das Sendesignal aus einer Folge gleichartiger, frequenzmodulierter Signalpulse (Chirps) besteht. Das Modulationsmuster besteht folglich nicht aus einer einzelnen Modulationsrampe, sondern aus einem kompletten Satz aufeinanderfolgender Chirps. Es handelt sich um ein Puls-Dopplerverfahren mit Pulskompression, bei dem zunächst eine Trennung der Radarobjekte nach ihren Entfernungen erfolgt und anschließend, anhand der Unterschiede von Phasenlagen zwischen den Reflexionen der einzelnen Signalpulse, Ortsveränderungen und damit Geschwindigkeiten der Radarobjekte ermittelt werden. Bei einem typischen Modulationsmuster nehmen die Mittenfrequenzen der einzelnen Chirps von Chirp zu Chirp gleichmäßig zu oder ab, so dass die Chirps ihrerseits eine Rampe bilden, die als "langsame Rampe" bezeichnet wird, während die Chirps auch als "schnelle Rampen" bezeichnet werden. Dieses Verfahren wird deshalb auch als "Multi-Speed-FMCW" (MSFMCW) bezeichnet.

Das MSFMCW-Verfahren erlaubt eine genauere Messung der Abstände und Relativgeschwindigkeiten und ist insbesondere in den Fällen robuster, in denen eine Vielzahl von Objekten gleichzeitig geortet werden. Allerdings haben die langsamen Rampen naturgemäß eine relativ große Länge. Die zeitlichen Abstände zwischen den einzelnen Messungen werden daher so groß, dass aufgrund der Eigenbewegung der Objekte die für die Anwendung des MIMO-Prinzips notwendige Phasenkorrelation zwischen den Signalen verloren geht.

Aufgabe der Erfindung ist es, ein MIMO-Radar mit verbesserter Messgenauigkeit zu schaffen.

Diese Aufgabe wird bei einem Radarsensor der eingangs genannten Art dadurch gelöst, ein Messzyklus des Radarsensors mindestens zwei Perioden umfasst, in denen jeweils zwischen mindestens zwei Kombinationen von Sende- und Empfangsarrays gewechselt wird, und dass die beteiligten Kombinationen von Sende- und Empfangsarrays für die mindestens zwei Perioden voneinander verschieden sind..

Die Verwendung von drei oder mehr unterschiedlichen Kombinationen von Sende- und Empfangsarrays ermöglicht eine größer (virtuelle) Apertur und/oder eine Auffüllung der Arrays, so dass die Genauigkeit und/oder die Eindeutigkeit der Winkelschätzung verbessert wird. Da jedoch innerhalb einer einzelnen Periode nicht alle möglichen Kombinationen ausgeschöpft werden, verkürzt sich der zeitliche Abstand, in dem die Radarechos der mit verschiedenen Sendearrays gesendeten Signale ausgewertet werden können. Dadurch verbessert sich die Kohärenz dieser Signale und damit die Messgenauigkeit.

Vorteilhafte Ausgestaltungen und Weiterbildungen der Erfindung sind in den Unteransprüchen angegeben.

In einer vorteilhaften Ausführungsform wird innerhalb jeder Periode, beispielsweise innerhalb jeder langsamen Modulationsrampe, nach jedem Chirp das verwendete Sendearray gewechselt. Beispielsweise wird abwechselnd mit zwei verschiedenen Sendearrays gesendet, wobei jeder Chirp, der mit einem Array gesendet wurde, unmittelbar danach mit identischer Frequenzlage und identischem Hub noch einmal gesendet wird, nun aber mit dem anderen Sendearray, bevor wieder mit dem ersten Sendearray der nächste Chirp mit etwas höherer Frequenz gesendet wird.

Ein "Sendearray" kann aus einem einzelnen Antennenelement oder aus einer Kombination mehrerer Antennenelemente bestehen. Wenn das Array zwei benachbarte Antennenelemente aufweist, die mit frequenzgleichen Signalen gespeist werden, so überlagern sich die von diesen beiden Antennenelementen emittierten Radarwellen zu einem Signal mit geänderter Phasenlage. Dieses Signal ist äquivalent zu einem Signal, das von einem Punkt emittiert würde, der zwischen den beiden Antennenelementen liegt. Dieser Punkt bildet das sogenannte Phasenzentrum der beiden Signale. Da dieses Phasenzentrum an einem Ort liegt, an dem sich kein reales Antennenelement befindet, erhält man durch die gemeinsame Erregung zweier oder mehrerer Antennenelemente zusätzliche (virtuelle) sendende Antennenelemente, die mit den realen empfangenden Antennenelementen kombiniert werden können und somit zu einer Auffüllung des virtuellen Antennenarrays führen. Auf diese Weise kommt die Konfiguration einer ULA-Struktur näher, und die Wahrscheinlichkeit von Mehrdeutigkeiten nimmt ab.

Das Zusammenschalten zweier oder mehrerer Antennenelemente hat zudem den Vorteil, dass eine höhere Sendeleistung erzielt wird und damit die Reichweite des Radarsensors verbessert wird.

In einer vorteilhaften Ausführungsform sind die realen Antennenelemente in ungleichmäßigen Abständen angeordnet, so dass die Antennenkonfiguration möglichst wenig Symmetrien aufweist, was zur weiteren Unterdrückung von Mehrdeutigkeiten beiträgt. Außerdem lässt sich dadurch vermeiden, dass virtuelle Antennenpositionen, die sich durch Kombinationen unterschiedlicher Sende- und Empfangselemente ergeben, örtlich zusammenfallen.

Der Radarsensor ist vorzugsweise als monostatischer Radarsensor ausgebildet, d.h., jedes Antennenelement kann sowohl als sendendes Element als auch empfangendes Element genutzt werden.

Wenn zwei oder mehr Antennenelemente mit einem frequenzgleichen Signal gespeist werden, müssen die Phasen und Amplituden, mit denen das Signal den beiden oder mehreren Elementen zugeführt wird, nicht notwendigerweise übereinstimmen. Dadurch ergibt sich gemäß einer Weiterbildung der Erfindung die Möglichkeit zu einer Strahlformung.

Bei den heute üblichen FMCW-Verfahren stimmt die Zykluszeit, d.h., die Dauer eines einzelnen Messzyklus, mit der Periodendauer der Frequenzmodulation überein. Innerhalb eines Messzyklus wird eine bestimmte Anzahl von Modulationsmustern (langsamen Rampen) gesendet, und die empfangenen Signale für alle empfangenen Modulationsmuster werden aufgezeichnet und ausgewertet. Die Zykluszeit setzt sich deshalb zusammen aus der Zeit, die zum Senden der Modulationsmuster benötigt wird, und einer zusätzlichen Rechenzeit, die ein Prozessor zur Verarbeitung der empfangenen Signale und zur Berechnung der Abstands- und Geschwindigkeitsdaten benötigt.

Bei sicherheitsrelevanten Assistenzfunktionen ist es jedoch wichtig, dass das Verkehrsgeschehen mit möglichst hoher zeitlicher Auflösung verfolgt werden kann Das heißt, die Zykluszeit sollte möglichst klein sein. Da sich die Dauer der Modulationsmuster aus Gründen der Messgenauigkeit nicht verkürzen lässt, kann eine Verkürzung der Zykluszeit nur durch eine Verkürzung der Rechenzeit erreicht werden. Das erfordert den Einsatz leistungsfähigerer und damit kostspieligerer Prozessoren.

Gemäß einer Weiterbildung der Erfindung kann man für den Abgleich des für ein Modulationsmuster im aktuellen Messzyklus erhaltenen Signals mit dem oder den für andere Modulationsmuster erhaltenen Signalen auf die Signale aus mindestens einem früheren Messzyklus zurückgreifen.

Die Erfindung nutzt dabei den Umstand aus, dass sich aufgrund der Trägheit der beteiligten Kraftfahrzeuge die Geschwindigkeiten von Messzyklus zu Messzyklus nur wenig ändern, so dass es im wesentlichen nur die Abstände sind, die von einem Messzyklus zum nächsten eine signifikante Änderung erfahren. Die Geschwindigkeitsinformation wird deshalb nicht wesentlich verfälscht, wenn man statt der Daten aus dem aktuellen Messzyklus Daten aus einem oder mehreren unmittelbar vorangegangenen Messzyklen verwendet. Wenn mit N verschiedenen Modulationsmustern gearbeitet wird, M die zum Senden eines einzelnen Modulationsmusters benötigt Zeit ist und T die zur Auswertung eines einzelnen Modulationsmusters benötigte Rechenzeit ist, so ist bei dem herkömmlichen Verfahren die Zykluszeit Z gegeben durch:

$$Z = N*(M+T).$$

Bei dem erfindungsgemäßen Verfahren lässt sich dagegen die Zykluszeit verkürzen auf:

$$Z = M+T$$

indem man beim Abgleich auf die Ergebnisse auf den letzten (N-1) Messzyklen zurückgreift.

Es ergibt sich also eine Verkürzung der Zykluszeit um (N-1)*(M+T).

Diese Verkürzung der Zykluszeit hat wiederum zur Folge, dass auch der zeitliche Abstand zwischen den verschienen Modulationsmustern entsprechend klein ist, wodurch sich der Fehler in den Geschwindigkeitsdaten weiter verringert.

Weiterhin ist es im Rahmen der Erfindung möglich, nicht nur zwischen verschiedenen Sendearrays umzuschalten, sondern auch zwischen verschiedenen Empfangsarrays. Dazu brauchen nur zusätzliche Antennenelemente vorgesehen zu werden aber keine zusätzlichen Auswertungskanäle. Der Wechsel des Empfangsarrays erfolgt dann dadurch, dass einen andere Auswahl der Sendeantennen mit den Auswertungskanälen verbunden wird. Durch die Kombination mit verschiedenen Sendearrays lässt sich dann das virtuelle MIMO-Array weiter vergrößern und/oder verdichten.

Im folgenden werden Ausführungsbeispiele der Erfindung anhand der Zeichnung näher erläutert.

Es zeigen:

Fig. 1    ein Blockdiagramm eines erfindungsgemäßen Radarsensors;

Fig. 2    eine schematische Darstellung einer Folge von Frequenzmodulationsrampen (Chirps) eines Sendesignals;

Fig. 3    eine schematische Darstellung von Amplitude und Phasenlage eines Peaks im Frequenzspektrum eines einzelnen Chirps;

Fig. 4    eine schematische Darstellung von Amplitudenwerten eines Peaks in den Frequenzspektren mehrerer Chirps;

Fig. 5    eine schematische Darstellung von Beziehungen zwischen Relativgeschwindigkeit V und Abstand D eines Radarobjektes aus einer Auswertung einer Folge von Chirps;

Fig. 6    eine schematische Darstellung zur Erläuterung eines Abgleichs unterschiedlicher ermittelter Beziehungen zwischen V und D aus Signalen, die zwei Folgen von Frequenzrampen zugeordnet sind;

Fig. 7    ein Beispiel eines Zyklusschemas für den erfindungsgemäßen Radarsensor;

Fig. 8    ein Diagramm zur Erläuterung der Funktionsweise des Radarsensors nach Fig. 1 bis 6; und

Fig. 9    Diagramme zur Erläuterung der Vorteile des Radarsensors.

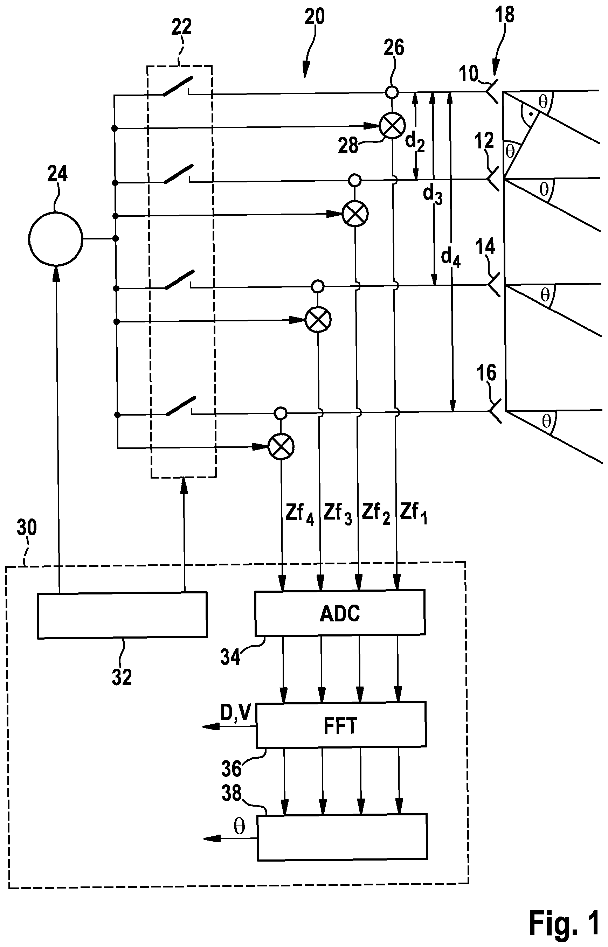

Der in Fig. 1 gezeigte Radarsensor weist vier Antennenelemente 10, 12, 14, 16 auf, die zusammen eine planare Gruppenantenne 18 bilden. Der Radarsensor wird so in ein Kraftfahrzeug eingebaut, dass die Antennenelemente 10 - 16 auf gleicher Höhe nebeneinander liegen, so dass ein Winkelauflösungsvermögen des Radarsensors in der Horizontalen (im Azimut) erreicht wird. In Fig. 1 sind symbolisch Radarstrahlen dargestellt, die von den Antennenelementen unter einem Azimutwinkel 0 empfangen werden.

Ein Hochfrequenzteil 20 zur Ansteuerung der Antennenelemente wird beispielsweise durch ein oder mehrere MMICs (Monolithic Microwave Integrated Circuits) gebildet und umfasst ein Schaltnetzwerk 22, über das die einzelnen Antennenelemente selektiv mit einem lokalen Oszillator 24 verbindbar sind, der das zu sendende Radarsignal erzeugt. Die von den Antennenelementen 10 - 16 empfangenen Radarechos werden jeweils mit Hilfe eines Zirkulators 26 ausgekoppelt und einem Mischer 28 zugeführt, wo sie mit dem vom Oszillator 24 gelieferten Sendesignal gemischt werden. Auf diese Weise erhält man für jedes der Antennenelemente ein Zwischenfrequenzsignal $Zf_1$, $Zf_2$, $Zf_3$, $Zf_4$, das einer elektronischen Steuer- und Auswerteeinheit 30 zugeführt wird.

Die Steuer- und Auswerteeinheit 30 enthält einen Steuerungsteil 32, der die Funktion des Oszillators 24 und des Schaltnetzwerkes 22 steuert. Die Frequenz des vom Oszillator 24 gelieferten Sendesignals wird periodisch in Form einer Folge von steigenden und/oder fallenden Frequenzrampen moduliert.

Weiterhin enthält die Steuer- und Auswerteeinrichtung 30 einen Auswerteteil mit einem vierkanaligen Analog/Digital-Wandler 34, der die von den vier Antennenelementen erhaltenen Zwischenfrequenzsignale $Zf_1$ - $Zf_4$ digitalisiert und jeweils über die Dauer einer einzelnen Frequenzrampe aufzeichnet. Die so erhaltenen Zeitsignale werden dann kanalweise in einer Transformationsstufe 36 durch Schnelle Fouriertransformation in entsprechende Frequenzspektren umgewandelt. In diesen Frequenzspektren zeichnet sich jedes geortete Objekt in der Form eines Peaks ab, dessen Frequenzlage von der Signallaufzeit vom Radarsensor zum Objekt und zurück zum Radarsensor sowie - aufgrund des Doppler-Effektes - von der Relativgeschwindigkeit des Objekts abhängig ist. Aus den Frequenzlagen zweier Peaks, die für dasselbe Objekt erhalten wurden, jedoch auf Frequenzrampen mit unterschiedlicher Steigung, beispielsweise einer steigenden Rampe und einer fallenden Rampe, lässt sich dann der Abstand D und die Relativgeschwindigkeit V des betreffenden Objektes berechnen.

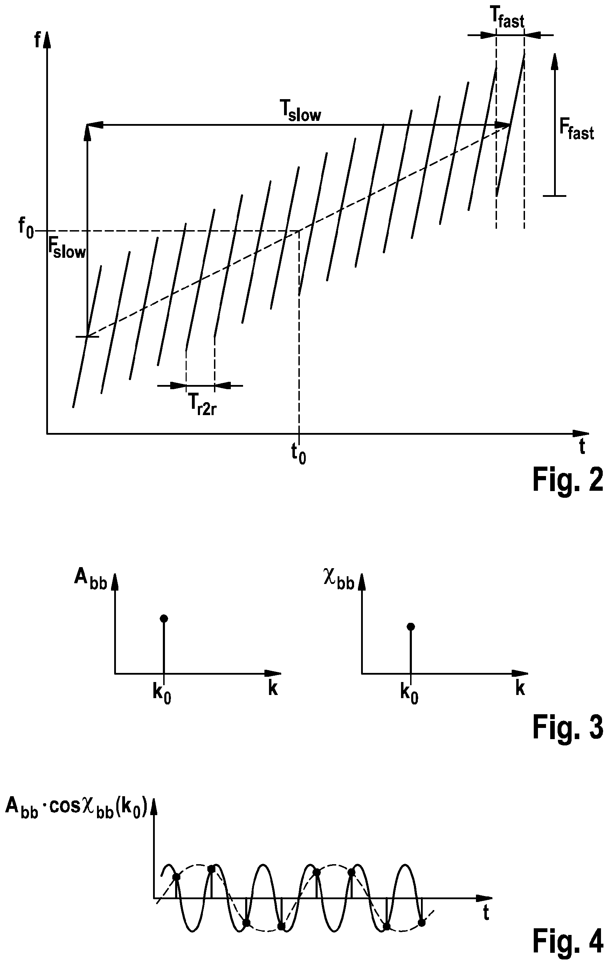

Unter Bezugnahme auf Fig. 2 bis 6 soll nun zunächst das Funktionsprinzip eines MSFMCW-Radars erläutert werden.

In Fig. 2 ist die Frequenz f eines Sendesignals über der Zeit t dargestellt, in der Form einer Folge von (schnellen) Frequenzrampen (Chirps), die jeweils einen Hub $F_{fast}$ und eine Zeitdauer $T_{fast}$ aufweisen. Die einzelnen Frequenzrampen folgen aufeinander mit einem zeitlichen Abstand $T_{r2r}$ ("ramp-to-ramp"). In dem in Fig. 2 gezeigten Beispiel ist $T_{fast}$ gleich $T_{r2r}$, so dass die einzelnen Frequenzrampen unmittelbar aufeinander folgen.

Fig. 2 zeigt eine allgemeine Darstellung, bei der sich die Mittenfrequenz der einzelnen Frequenzrampen im Verlaufe der Folge ändert. Insbesondere beschreibt die Mittenfrequenz der schnellen Rampen ihrerseits eine lineare Frequenzrampe mit der Mittenfrequenz $f_0$ zum Zeitpunkt $t_0$. Diese Frequenzrampe wird im folgenden auch als langsame Rampe bezeichnet. Sie hat einen Frequenzhub $F_{slow}$ bei einer Rampendauer $T_{slow} = (N_{slow}-1) * T_{r2r}$, wobei $N_{slow}$ die Anzahl der schnellen Rampen bezeichnet.

In dem Fall, dass die langsame Rampe den Frequenzhub 0 hat, sind die schnellen Rampen der Folge identisch, d.h. beschreiben identische Frequenzverläufe.

In einem Messzyklus werden zwei oder mehr sich unterscheidende Folgen von schnellen Rampen verwendet, wobei innerhalb der jeweiligen Folge die schnellen Rampen (Chirps) jeweils den gleichen Frequenzhub $F_{fast}$ und die gleiche Rampendauer $T_{fast}$ und denselben zeitlichen Abstand $T_{r2r}$ zwischen den Rampen aufweisen. Die wenigstens zwei Folgen innerhalb eines Messzyklus können sich beispielsweise unterscheiden durch unterschiedliche Werte des Betrages und/oder des Vorzeichens des Frequenzhubes $F_{fast}$ der schnellen Rampen, unterschiedliche Rampendauern der schnellen Rampen, unterschiedliche Rampenwiederholzeiten $T_{r2r}$ der schnellen Rampen, unterschiedliche Mittenfrequenzen $f_0$ der langsamen Rampen, unterschiedliche Anzahl $N_{slow}$ der schnellen Rampen und/oder unterschiedliche Frequenzhübe $F_{slow}$ der langsamen Rampe.

Im folgenden wird zunächst zur Vereinfachung der Darstellung die Auswertung des Messsignals für eine einzelne Folge von schnellen Rampen des Sendesignals erläutert.

Die Frequenz des Sendesignals liegt beispielsweise im Bereich von 76 GHz. Beispielsweise kann die Mittenfrequenz der langsamen Rampe 76 GHz betragen.

In dem vom Mischer 28 gelieferten Basisbandsignal ist jeder schnellen Rampe in der Folge ein Teilsignal mit der Dauer $T_{fast}$ zugeordnet. Dabei kann davon ausgegangen werden, dass für ein Radarobjekt im Erfassungsbereich des Radarsensorsystems die Signallaufzeit klein gegenüber der Rampendauer $T_{fast}$ ist.

In einem ersten Schritt der Auswertung wird ein Frequenzspektrum wenigstens eines Teilsignals ausgewertet.

Das Teilsignal des Basisbandsignals, welches einer schnellen Rampe entspricht, wird an einer Anzahl $N_{fast}$ äquidistanter Zeitpunkte abgetastet, also digitalisiert, und ein Frequenzspektrum des Teilsignals wird bestimmt. Das Frequenzspektrum wird beispielsweise durch Berechnen einer schnellen Fouriertransformation (FFT) berechnet.

Fig. 3 zeigt schematisch über dem Frequenzbin k aufgetragen die Amplitude $A_{bb}$ und die Phase $\chi_{bb}$ des erhaltenen Signals in Polarkoordinaten.

Für ein von einem einzelnen Radarobjekt reflektiertes Signal wird beispielsweise im Frequenzbin $k_0$ ein Peak mit der Amplitude $A_{bb}(k_0)$ erhalten, dem eine entsprechende Phase $\chi_{bb}(k_0)$ zugeordnet ist. Der Frequenzbin $k_0$ kennzeichnet dabei die Frequenzlage des Radarobjektes in dem betreffenden Frequenzspektrum des Teilsignals.

Bei einer linearen Frequenzmodulation des Sendesignals ist die Frequenzlage eines einem Radarobjekt zugeordneten Peaks aus einer Summe zweier Terme zusammengesetzt, von denen der erste Term proportional zum Produkt aus dem Abstand D des Radarobjekts vom Radarsensor und dem Rampenhub $F_{fast}$ ist und der zweite Term proportional zum Produkt aus der Relativgeschwindigkeit V des Radarobjektes, der Mittenfrequenz der schnellen Rampe und der Rampendauer $T_{fast}$ ist. Dies entspricht der FMCW-Gleichung

$$k_0 = (2/c)\,(D_{0,r}\,F_{fast} + f_{0,r}\,V_{0,r}\,T_{fast}),$$

wobei c die Lichtgeschwindigkeit ist, $D_{0,r}$ der Objektabstand zum Mittenzeitpunkt der r-ten Rampe ist, mit r = 1,2, ...,$N_{slow}$, und wobei $f_{0,r}$ die Mittenfrequenz der r-ten Rampe und $V_{0,r}$ die Relativgeschwindigkeit des Radarobjektes am Mittenzeitpunkt der r-ten schnellen Rampe ist. Die ermittelte Frequenzlage des Peaks entspricht somit einer linearen Beziehung zwischen der Relativgeschwindigkeit V und dem Abstand D des Radarobjektes. Diese Beziehung stellt eine erste Information über die Relativgeschwindigkeit und den Abstand des Radarobjektes dar. Sie ist insbesondere abhängig vom Rampenhub $F_{fast}$, der Rampendauer $T_{fast}$ und der Mittenfrequenz $f_{0,r}$ der schnellen Rampen.

Bei nicht zu hohen Relativgeschwindigkeiten V und Beschleunigungen eines Radarobjektes ergibt sich über die Folge der schnellen Rampen annähernd dieselbe Frequenzlage des Peaks, und im folgenden soll $k_0$ diesen mittleren Frequenzbin des Radarobjektes über alle schnellen Rampen der Folge bezeichnen.

Die dem Peak zugeordnete Phase $\chi_{bb}(k_0)$ bei der Frequenzlage $k_0$ ist besonders empfindlich für Veränderungen des Abstandes des Radarobjektes während des Durchlaufens der Folge schneller Rampen. So ergibt eine Abstandsveränderung um die halbe Wellenlänge des Radarsignals bereits eine Phasenverschiebung um eine ganze Periode der Schwingung.

Fig. 4 zeigt schematisch mit einer durchgezogenen Linie den einer harmonischen Schwingung entsprechenden zeitlichen Verlauf des Realteils des Spektrums

$$A_{bb} * \cos \chi_{bb}(k_0)$$

bei der Frequenzlage $k_0$ des Radarobjektes in den Frequenzspektren während des Verlaufs der Folge der schnellen Rampen. Die in durchgezogenen Linien dargestellte harmonische Schwingung entspricht dabei einem Fall ohne Beschleunigung des Radarobjektes.

Bei einer Radarsignalfrequenz von etwa 76 GHz ist die Wellenlänge etwa 4 mm. Bei einer Relativgeschwindigkeit von 86 km/h, entsprechend 24 m/sec, ändert sich die Phase somit mit einer Frequenz von 12000 Hz. Ein dieser Frequenz entsprechender Peak wird im Frequenzspektrum des zeitlichen Verlaufs des Realteils erwartet, wobei der zeitliche Verlauf den aufeinanderfolgenden schnellen Rampen entspricht; jede Rampe entspricht einem Abtastwert des zeitlichen Verlaufs. Wird durch eine zu niedrige Abtastfrequenz der Phasenänderungen, d.h. eine zu große Rampenfolgezeit $T_{r2r}$, das Nyquist-Shannon-Abtasttheorem verletzt, so kann die Frequenz der Phasenänderungen nicht eindeutig bestimmt werden.

Fig. 4 zeigt schematisch eine derartige Unterabtastung. Die Werte des Realteils an den Mittenzeitpunkten der jeweiligen schnellen Rampen sind markiert. Es lässt sich nicht entscheiden, ob die wahre Frequenz der Phasenänderungen durch die in durchgezogenen Linien eingezeichnete Kurve oder durch die gestrichelt eingezeichnete Kurve angegeben wird. Die Frequenz ist also mehrdeutig.

Die Frequenzlage der der Phasenänderung entsprechenden harmonischen Schwingung kann bestimmt werden, indem man die Funktion, die die für ein Objekt gemessene Phase $\chi_{bb}(r)$ als Funktion des Rampenindex r angibt, erneut einer FourierTransformation unterzieht. Diese Frequenzlage kann angegeben werden durch ihren Frequenzbin $l_0$ und setzt sich näherungsweise additiv zusammen aus einem zum mittleren Abstand D und zum Rampenhub $F_{slow}$ der langsamen Rampe proportionalen Term und einem Term, der zur mittleren Relativgeschwindigkeit V, der Rampendauer $T_{slow}$ der langsamen Rampe und der Mittenfrequenz $f_0$ der langsamen Rampe proportional ist. Dies entspricht wiederum einer FMCW-Gleichung für die langsame Rampe:

$$I_0 = (2/c)\,(D\,F_{slow} + V\,T_{slow}\,f_o).$$

Aus der ermittelten Frequenzlage ergibt sich somit im allgemeinen Fall, d.h. mit einem Rampenhub der langsamen Rampe $F_{slow} \neq 0$, eine lineare Beziehung zwischen der Relativgeschwindigkeit und dem Abstand des Radarobjektes, die allerdings hinsichtlich der Relativgeschwindigkeit V und des Abstands D mehrdeutig ist. Diese Beziehung stellt eine zweite Information über die Relativgeschwindigkeit und den Abstand des Radarobjektes dar. Im speziellen Fall $F_{slow} = 0$ wird im folgenden dennoch von einer langsamen Rampe gesprochen; diese hat die Steigung 0 und ergibt zweite Information lediglich über die Geschwindigkeit. Diese ist hinsichtlich der Relativgeschwindigkeit V eindeutig bis auf ganzzahlige Vielfache des Produktes aus der halben Wellenlänge und der Abtastfrequenz $1/T_{r2r}$ der langsamen Rampe.

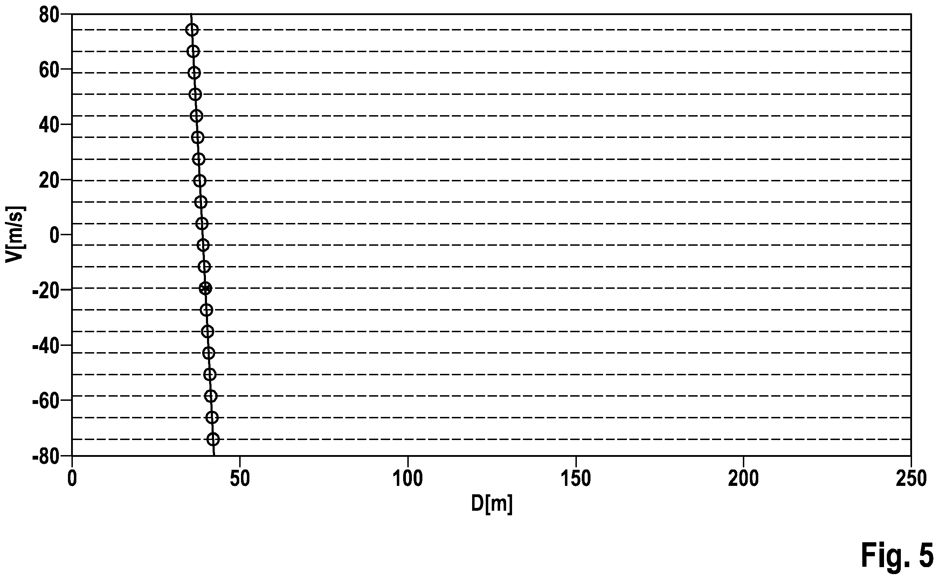

Fig. 5 zeigt beispielhaft die sich aus der Auswertung des Messsignals zu einer Folge von Frequenzrampen ergebende Information über die Relativgeschwindigkeit V und den Abstand D. Die Parameter der Frequenzmodulation sind die folgenden: $F_{fast} = 425\,MHz$, $T_{fast} = 0,25\,ms$, jede schnelle Rampe wird abgetastet an $N_{fast} = 512$ Abtastzeitpunkten, der Frequenzhub der langsamen Rampe ist $F_{slow} = 0$, der zeitliche Abstand der schnellen Rampen ist $T_{r2r} = 0,25\,ms$, die Anzahl der schnellen Rampen, d.h. die Anzahl der Abtastzeitpunkte der langsamen Rampe, ist $N_{slow} = 16$, so dass sich eine Zeitdauer der langsamen Rampen von $T_{slow} = 4\,ms$ ergibt. Das erfasste Radarobjekt hat einen Abstand von $d = 40\,m$ und eine Relativgeschwindigkeit $v = -20\,m/s$.

Aus der Auswertung eines Frequenzspektrums eines Teilsignals ergibt sich eine gegenüber der Vertikalen geneigte Gerade, entsprechend einer linearen Beziehung zwischen der Relativgeschwindigkeit V und dem Abstand D. Da der Rampenhub der langsamen Rampe $F_{slow} = 0$ beträgt, ergibt sich aus der Fourier-Analyse der Werte der Frequenzspektren der Teilsignale bei der Frequenzlage $k_0$ des Radarobjektes ein mehrdeutiger Wert für die Relativgeschwindigkeit V, entsprechend den in konstantem Abstand zueinander liegenden, horizontalen, gestrichelt eingezeichneten Linien im Diagramm in Fig. 5. Dieser mehrdeutige Wert stellt die zweite Information über die Relativgeschwindigkeit dar. Durch Verknüpfen der ersten Information mit der zweiten Information unter Berücksichtigung der genannten Mehrdeutigkeit ergeben sich potentielle Wertepaare (V, D). Diese sind in Fig. 5 mit Kreisen gekennzeichnet, die einen Toleranzbereich für die Vornahme des Abgleichs veranschaulichen. Das echte Ziel bei $V = -20\,m/s$ ist durch einen Stern markiert.

Eine Eindeutigkeit der Ermittlung von Relativgeschwindigkeit und Abstand des Radarobjekts kann hergestellt werden, indem weitere erste Information über Relativgeschwindigkeit und Abstand und/oder weitere zweite Information über Relativgeschwindigkeit und optional Abstand berücksichtigt wird.

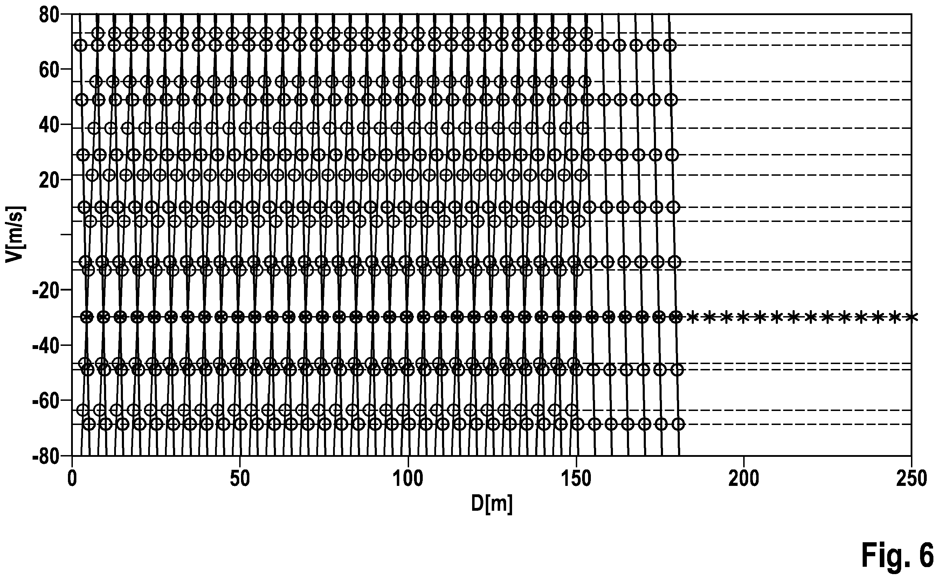

Fig. 6 veranschaulicht schematisch eine eindeutige Bestimmung von Relativgeschwindigkeiten und Abständen von Radarobjekten bei Verwendung zweier unterschiedlicher Modulationsmuster in jedem Messzyklus.

Die Parameter des ersten Modulationsmusters sind die folgenden: $F_{fast} = 425\,MHz$, $T_{fast} = 0,10\,ms$, $N_{fast} = 1024$, $F_{slow} = 0$, $T_{r2r} = 0,10\,ms$, $N_{slow} = 32$, so dass sich $T_{slow} = 3,2\,ms$ ergibt.

Die Parameter des zweiten Modulationsmusters sind die folgenden: $F_{fast} = -250\,MHz$, $T_{fast} = 0,115\,ms$, $N_{fast} = 512$, $F_{slow} = 0$, $T_{r2r} = 0,115\,ms$, $N_{slow} = 32$, so dass sich $T_{slow} = 3,68\,ms$ ergibt.

Bei diesem Beispiel wird angenommen, dass eine Reihe von Radarobjekten bei einer Relativgeschwindigkeit von $V = -30\,m/s$ im Abstandsbereich von $D = 5\,m$ bis $D = 250\,m$ vorhanden sind, wobei die Radarobjekte jeweils einen Abstand von 5 m zueinander haben. Es kann sich beispielsweise um stehende Ziele handeln, auf die sich das eigene Kraftfahrzeug mit einer Geschwindigkeit von 30 m/s zu bewegt.

Die linearen Beziehungen zwischen V und D unterscheiden sich für die beiden Modulationsmuster. Das erste Modulationsmuster liefert eine Schar paralleler, fallender Geraden, je eine Gerade für jedes Objekt. Entsprechend liefert das zweite Modulationsmuster liefert eine Schar steigender Geraden. Weiterhin haben die aus den beiden Modulationsmustern ermittelten zweiten Informationen über die Geschwindigkeit V des Radarobjektes verschiedene Mehrdeutigkeitsweiten.

In Fig. 6 sind die Schnittpunkte der Geraden wie in Fig. 5 mit Kreisen gekennzeichnet. Der Abgleich der aus den beiden Modulationsmustern erhaltenen Signale erfolgt dadurch, dass man diejenigen Werte für die Relativgeschwindigkeit V und den Abstand D sucht, für welche die von den beiden Modulationsmustern gelieferten Geradenschnittpunkte am besten übereinstimmen. Im gezeigten Beispiel erhält man so für alle Objekte die Relativgeschwindigkeit $V = -30\,m/s$.

Die Kette der stehenden Radarobjekte bei einer Relativgeschwindigkeit von $V = -30\,m/s$ kann aufgelöst und bis zu einem Abstand von 150 m detektiert werden.

Um das Verfahren robuster gegenüber Situationen zu machen, in denen mehrere Objekte, die unterschiedliche Relativgeschwindigkeiten haben, gleichzeitig geortet werden, ist es zweckmäßig nicht nur mit zwei unterschiedlichen Modulationsmustern zu arbeiten, sondern mit mindestens drei unterschiedlichen Modulationsmustern je Messzyklus.

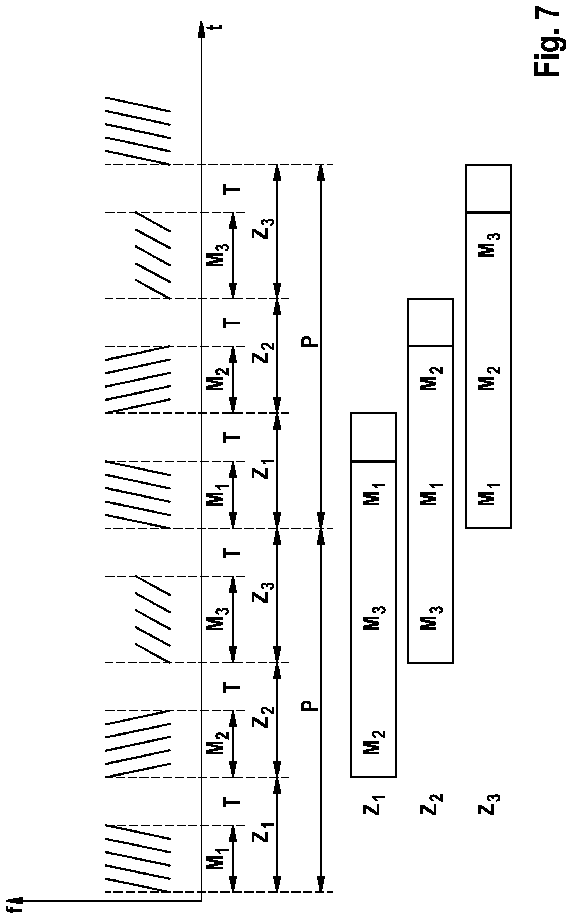

Um eine kürzere Zykluszeit zu erreichen, wird jedoch vorzugsweise mit einem Zyklusschema gearbeitet, dass in Fig. 7 dargestellt ist. Dort ist (der Einfachheit halber für langsame Rampen mit der Steigung null) die Frequenz f des Sendesignals für zwei komplette Messzyklen P gegen die Zeit t aufgetragen. In jedem Messzyklus P wird die Frequenz gemäß drei verschiedenen Modulationsmustern $M_1$, $M_2$ und $M_3$ moduliert. An jedes Modulationsmuster schließt sich ein Rechenzeitintervall der Länge T an, innerhalb dessen das für das betreffende Modulationsmuster erhaltene Basisbandsignal ausgewertet wird.

Innerhalb jedes Rechenzeitintervalls erfolgt außerdem ein Abgleich der Ergebnisse, die man für die letzten drei Modulationsmuster erhalten hat. In Fig. 7 ist dies symbolisch für die Rechenzeitintervalle im zweiten Messzyklus dargestellt. Dieser Messzyklus enthält drei Teilzyklen $Z_1$, $Z_2$ und $Z_3$. Im Teilzyklus $Z_1$ wird das Ergebnis (die Schar von Geraden im V-D-Diagramm), das man für das Modulationsmuster $M_1$ im aktuellen Messzyklus erhalten hat, mit den Ergebnissen abgeglichen, die man für die Modulationsmuster $M_2$ und $M_3$ in den beiden vorangegangenen Teilzyklen (innerhalb des vorangegangenen Messzyklus P) erhalten hat. Durch diesen Abgleich erhält man so für jedes Objekt ein eindeutiges Wertepaar für Abstand und Relativgeschwindigkeit, das am Ende dieses Teilzyklus ausgegeben werden kann. Entsprechend wird im Teilzyklus $Z_2$ das Ergebnis, das man für das Modulationsmuster $M_2$ in diesem Teilzyklus erhalten hat, mit dem Ergebnis für das unmittelbar vorangehende Modulationsmuster $M_1$ und das diesem vorangehende Modulationsmuster $M_3$ abgeglichen. Analog verfährt man auch für den Teilzyklus $Z_3$.

Auf diese Weise erhält man aktualisierte Werte für den Abstand und die Relativgeschwindigkeit jedes Objekts schon nach einer Zykluszeit, die sich nur aus der Dauer eines einzelnen Modulationsmusters und der Rechenzeit T zusammensetzt.

Nachfolgend soll nun unter Bezugnahme auf Fig. 1, 7 und 8 das MIMO-Prinzip und seine Kombination mit dem oben beschriebenen MSFMCW-Verfahren erläutert werden.

Wie in Fig. 1 anhand der Radarstrahlen schematisch dargestellt wird, führen die unterschiedlichen Positionen der Antennenelemente 10 - 16 dazu, dass die Radarstrahlen, die von ein und demselben Antennenelement emittiert wurden, am Objekt reflektiert wurden und dann von den verschiedenen Antennenelementen empfangen werden, unterschiedliche Lauflängen zurücklegen und deshalb Phasenunterschiede aufweisen. die vom Azimutwinkel $\theta$ des Objekts abhängig sind. Auch die zugehörigen Zwischenfrequenzsignale $Zf_1$ - $Zf_4$ weisen entsprechende Phasenunterschiede auf. Auch die Amplituden (Beträge) der empfangenen Signale sind von Antennenelement zu Antennenelement unterschiedlich, ebenfalls abhängig vom Azimutwinkel $\theta$. Die Abhängigkeit der komplexen Amplituden, also der Absolutbeträge und Phasen, der empfangenen Signale vom Azimutwinkel $\theta$ kann für jedes Antennenelement in Form eines Antennendiagramms in der Steuer- und Auswerteeinheit 30 hinterlegt sein. Ein Winkelschätzer 38 vergleicht für jedes geortete Objekt (jeden Peak im Frequenzspektrum) die in den vier Empfangskanälen erhaltenen komplexen Amplituden mit den Antennendiagrammen, um so den Azimutwinkel $\theta$ des Objekts zu schätzen. Als wahrscheinlichster Wert für den Azimutwinkel wird dabei der Wert angenommen, bei dem die gemessenen Amplituden am besten mit den in den Antennendiagrammen abgelesenen Werten korrelieren.

Bei dem hier beschriebenen MIMO-Radar sind jedoch die komplexen Amplituden in den vier Kanälen auch davon abhängig, welches der vier Antennenelemente 10, 12, 14, 16 als Sendeelement benutzt wird. Beispielsweise erlaubt es das Schaltnetzwerk 22, eine erste Frequenzrampe oder Folge von Frequenzrampen mit dem Antennenelement 10 zu senden (das Sendearray besteht dann nur aus dem einzigen Antennenelement 10), dann auf das Antennenelement 12 umzuschalten und dann nacheinander auf die Antennenelemente 14 und 16, wonach ein neuer Zyklus beginnt. Auf diese Weise erhält man 4 x 4 = 16 verschiedene Konstellationen, die durch das folgende Signalmodell beschrieben werden können.

Für das planare lineare Antennenarray mit den Antennenelementen 10, 12, 14, 16 als Empfangsarray hat (unter der idealisierten Annahme isotroper Antennenelemente) der Steuerungsvektor $a_{r\mu}(\theta)$ die folgenden Komponenten:

$$a_{r\mu}(\theta) = \exp(\, 2\pi i \cdot (d_{r\mu}/\lambda) \cdot \sin(\theta)\,), \quad \mu = 1, ..., 4$$

Dieser Steuerungsvektor bestimmt die Phasenbeziehungen zwischen den komplexen Amplituden der Signale, die von den vier Antennenelementen empfangen werden. Der Index $\mu$ bezeichnet dabei das Antennenelement, und die Größen $d_{r\mu}$ geben die Positionen der Antennenelemente in der Horizontalen an, bezogen auf irgendeinen beliebig gewählten Ursprung.

Entsprechend hat der Steuerungsvektor $a_{t\nu}(\theta)$ für das Empfangarray die Komponenten

$$a_{t\nu}(\theta) = \exp(\, 2\pi i \cdot (d_{t\nu}/\lambda) \cdot \sin(\theta)\,), \quad \nu = 1, ..., 4.$$

Bei dem in Fig. 1 gezeigten Beispiel eines monostatischen Arrays mit vier Antennenelementen kann man der Ort des Antennenelements 10 als Koordinatenursprung nehmen, so dass gilt:

$$d_{r1} = d_{t1} = 0,$$

$$d_{r2} = d_{t2} = d_2,$$

$$d_{r3} = d_{t3} = d_3$$

und

$$d_{r4} = d_{t4} = d_4.$$

Für die Winkelschätzung wird nun nach dem MIMO-Prinzip der virtuelle Array-Vektor gebildet, indem das Kronecker-Produkt aus $a_{t\nu}(\theta)$ und $a_{r\mu}(\theta)$ gebildet wird:

$$a(\theta) = (\quad a_{t1}(\theta)^{\cdot}a_{r1}(\theta), \quad a_{t1}(\theta)^{\cdot}a_{r2}(\theta), \quad a_{t1}(\theta)^{\cdot}a_{r3}(\theta), \quad a_{t1}(\theta)^{\cdot}a_{r4}(\theta),$$

$$a_{t2}(\theta)^{\cdot}a_{r1}(\theta), \quad a_{t2}(\theta)^{\cdot}a_{r2}(\theta), \quad a_{t2}(\theta)^{\cdot}a_{r3}(\theta), \quad a_{t2}(\theta)^{\cdot}a_{r4}(\theta),$$

$$a_{t3}(\theta)^{\cdot}a_{r1}(\theta), \quad a_{t3}(\theta)^{\cdot}a_{r2}(\theta), \quad a_{t3}(\theta)^{\cdot}a_{r3}(\theta), \quad a_{t3}(\theta)^{\cdot}a_{r4}(\theta),$$

$$a_{t4}(\theta)^{\cdot}a_{r1}(\theta), \quad a_{t4}(\theta)^{\cdot}a_{r2}(\theta), \quad a_{t4}(\theta)^{\cdot}a_{r3}(\theta), \quad a_{t4}(\theta)^{\cdot}a_{r4}(\theta) \quad )$$

Der Produktvektor hat sechzehn Komponenten, entsprechend sechzehn Positionen von virtuellen Antennenelementen. Die Komponenten des Vektors haben die Form

$$a_{t\nu}(\theta)^{\cdot}a_{r\mu}(\theta) = \exp(\ 2\pi i \cdot ((d_{t\nu} + d_{r\mu})/\lambda) \cdot \sin(\theta)\ );\ \nu = 1, ..., 4;\ \mu = 1, ..., 4$$

Die virtuellen Antennenpositionen entsprechen somit den Summen, die sich aus den Größen $d_1$ - $d_4$ bilden lassen. Damit erstreckt sich das virtuelle Array in der Horizontalen über eine wesentlich größere Spanne, das heißt, es hat eine größere Apertur und führt damit zu einer höheren Winkelauflösung, da schon kleine Änderungen im Azimutwinkel $\theta$ zu größeren Phasenunterschieden führen.

Wenn jedoch, um eine möglichst große Apertur zu erhalten, die Werte $d_1$ - $d_4$ deutlich größer gewählt werden als $\lambda/2$, so können aufgrund der Periodizität des Faktors $\sin(\theta)$ in den Komponenten des Array-Vektors in einzelnen Fällen Azimutwinkel auftreten, bei denen die Antennendiagramme für alle virtuellen Antennenelemente ähnliche komplexe Amplituden aufweisen, so dass sich der wirkliche Azimutwinkel des Objekts nicht eindeutig bestimmen lässt.

Bevorzugt wird deshalb das virtuelle Array durch zusätzliche virtuelle Elemente aufgefüllt. Zu diesem Zweck wird das Schaltnetzwerk 22 in bestimmten Betriebsphasen so angesteuert, dass zwei Schalter gleichzeitig geschlossen sind, also zwei zugehörige Antennenelemente 10, 12, 14, 16 gleichzeitig mit demselben Signal gespeist werden. Die gesendeten Signale überlagern sich dann zu einem Signal, dessen Wellenmuster etwa die Form hat, als würde es von einem Punkt in der Mitte zwischen den betreffenden Antennenelementen ausgehen.

Wenn beispielsweise die Antennenelemente 10 und 12 gemeinsam gespeist werden, erhält man im Steuerungsvektor für das Sendearray eine zusätzliche Komponente $\exp(2\pi i \cdot (d_2/2\lambda) \cdot \sin(\theta))$, entsprechend einem zusätzlichen Antennenelement in der Position $d_2/2$. Im Vektor des virtuellen Arrays ergibt das vier zusätzliche Komponenten, entsprechend virtuellen Elementen bei den Positionen $d_2/2$, $d_2/2+d_2$, $d_2/2+d_3$ und $d_2/2+d_4$. Für den wahren Azimutwinkel des Objekts müssen auch die Antennendiagramme, die zu diesen virtuellen Elementen gehören, die für den Peak des Objekts gemessenen komplexen Amplituden der Zwischenfrequenzsignale $Zf_1$- $Zf_4$ liefern. Auf diese Weise tragen die zusätzlichen Elemente dazu bei, etwaige Mehrdeutigkeiten zu vermeiden.

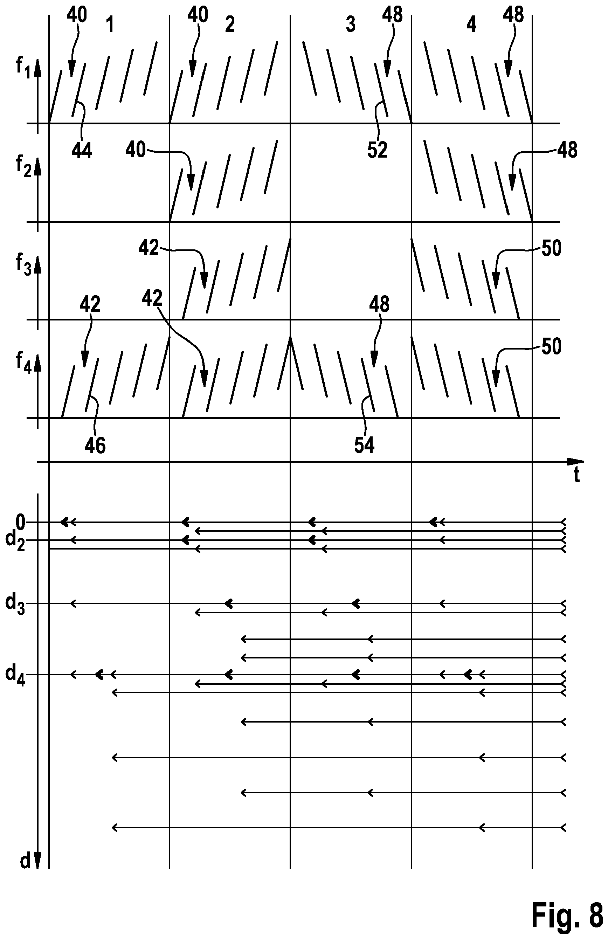

In der Praxis müssen nicht alle möglichen Kombinationen der Antennenelemente 10 - 16 als Sendearrays genutzt werden, sondern es wird vielmehr eine sinnvolle Auswahl getroffen. Ein Beispiel für eine mögliche Betriebsweise ist in Diagrammform in Fig. 8 dargestellt.

Im oberen Teil des Diagramms sind die Frequenzen $f_1$ - $f_4$ der von den Antennenelementen 10 - 16 gesendeten Signale als Funktion der Zeit t aufgetragen. In einer ersten Periode 1 sind nur die Antennenelemente 10 und 16 aktiv, und sie senden Signale (Frequenzen $f_1$ und $f_4$) die aus einer steigenden langsamen Frequenzrampe 40, 42 mit Chirps 44, 46 bestehen. Dabei wechseln die Chirps 44 und 46 miteinander ab, ohne einander zeitlich zu überlappen. Eine Überlagerung der gesendeten Signale wird so vermieden. Der erste Chirp 46, der mit dem Antennenelement 16 gesendet wird, hat die gleiche Frequenzlage und den gleichen Hub wie der erste Chirp 44, der mit dem Antennenelement 10 gesendet wird. Die beiden Chirps sind also identische Kopien oder Wiederholungen. Dasselbe gilt auch für jedes nachfolgende Paar von Chirps 44, 46. Die Folgen der Chirps 44, 46 werden in diesem Beispiel vom Oszillator 24 erzeugt, der durch das Schaltnetzwerk 22 abwechselnd mit den Antennenelementen 10 und 16 verbunden wird.

In einer zweiten Periode 2 werden die Frequenzrampen 40, 42 wiederholt. Das Schaltnetzwerk 22 verbindet den Oszillator nun jedoch während der Chirps 44 mit den beiden Antennenelementen 10 und 12 und während der Chirps 46 mit den beiden Antennenelementen 14 und 16, so dass das Sendearray jeweils aus einem Paar benachbarter Antennenelemente besteht.

In den Nachfolgenden Perioden 3 und 4 werden nach dem gleichen Schema fallende langsame Frequenzrampen 48, 50 mit Chirps 52, 54 gesendet. Damit ist ein vollständiger Messzyklus abgeschlossen, der in diesem vereinfachten Beispiel nur zwei Modulationsmuster (eine steigende und eine fallende langsame Rampe) enthält.

Im unteren Teil des Diagramms sind für jede Periode symbolisch die Positionen d der sendenden Antennenelemente (fett gedruckte Winkel) sowie die Positionen der jeweiligen virtuellen Antennenelemente (dünnere Winkel) dargestellt. In der ersten Periode stimmen für die Chirps 44 die virtuellen Positionen mit den realen Positionen überein. Für die Chirps 46 sind die Positionen um $d_4$ versetzt, da mit dem Antennenelement 16 gesendet wird, das um diese Distanz gegenüber dem Antennenelement 10 versetzt ist.

In der nachfolgenden Periode 2 hat das Sendearray für die Chirps 44 die gleiche Wirkung wie ein Array mit einem einzigen Antennenelement bei der Position $d_2/2$, und das Sendearray für die Chirps 46 hat die gleiche Wirkung wie ein Array mit einem einzigen Antennenelement bei der Position $(d_3+d_4)/2$. Auf die gleiche Weise ergeben sich auch die virtuellen Positionen in den Perioden 3 und 4.

In der äußersten rechten Spalte im unteren Teil des Diagramms in Fig. 8 sind sämtliche auf diese Weise erhaltenen virtuellen Positionen der Antennenelemente zusammen dargestellt. Man erkennt, dass das virtuelle Array in einem hohen Maß mit zusätzlichen virtuellen Elementen aufgefüllt ist, so dass man nicht nur ein hohes Winkelauflösungsvermögen (entsprechend der großen Apertur) erhält, sondern auch ein hohes Maß an Eindeutigkeit (aufgrund der Dichte der virtuellen Elemente innerhalb des Arrays).

Wenn die Antennenelemente 10 - 16 in gleichmäßigen Abständen angeordnet wären, so würden die Positionen einiger der virtuellen Antenneelemente zusammenfallen. Das wird jedoch in der gezeigten Ausführungsform dadurch vermieden, dass die Abstände zwischen den Antennenelementen ungleich sind: $d_4$ - $d_3$ > $d_3$ - $d_2$ > $d_2$. In der Praxis haben sich die folgenden Werte bewährt (in Einheiten der Wellenlänge $\lambda$):

$$d_1 = 0$$

$$d_2 = 1,2$$

$$d_3 = 5,5$$

$$d_4 = 10,2$$

Für jedes der virtuellen Arrays lässt sich ein Antennendiagramm erstellen, das die Amplituden- und/oder Phasenbeziehungen der in den vier Auswertungskanälen empfangenen Signale in Abhängigkeit vom angenommenen Einfallswinkel $\theta$ des Radarechos angibt. Generell wird der Azimutwinkel des georteten Objekts, also der tatsächliche Einfallswinkel $\alpha$, dem angenommenen Einfallswinkel $\theta$ entsprechen, für den sich die beste Übereinstimmung zwischen dem tatsächlich in den Auswertungskanälen gemessenen Amplituden- und/oder Phasenbeziehungen und den entsprechenden Werten im Antennendiagramm ergibt. Für die Auswertung lässt sich eine DML-Funktion (Deterministic Maximum Likelihood) berechnen, die die Korrelation zwischen den tatsächlich gemessenen Werten und den Werten im Antennendiagramm als Funktion des Einfallswinkels $\theta$ angibt. Der Funktionswert der DML-Funktion variiert zwischen 0 (keine Korrelation) und 1 (völlige Übereinstimmung). Die in den (in diesem Beispiel) vier Auswertungskanälen gemessenen Amplituden und/oder Phasen (komplexe Amplituden) kann man als vierkomponentigen Vektor auffassen. Entsprechend bilden auch die Werte in den Antennendiagrammen für jeden Einfallswinkel $\theta$ einen vierkomponentigen Vektor. Die DML-Funktion lässt sich dann berechnen, indem man diese beiden Vektoren jeweils auf 1 normiert und dann das Skalarprodukt oder den Betrag des Skalarprodukts bzw. das Betragsquadrat bildet. Das Maximum der DML-Funktion liefert dann den besten Schätzwert für den Azimutwinkel des Objekts.

Zur Bestimmung dieser Schätzwerte bildet der Winkelschätzer 38 für jeden der Chirps 44, 52 und für jeden darin gefunden Peak (also für jedes geortete Objekt) den vierkomponentigen Amplitudenvektor und berechnet die DML-Funktion anhand der Antennendiagramme für das virtuelle Array, das in den Perioden 1 und 3 benutzt wird. Entsprechend wird für die Chirps 46 und 54 die DML-Funktion anhand der Antennendiagramme für das virtuelle Array berechnet, das in den Perioden 2 und 4 benutzt wird.

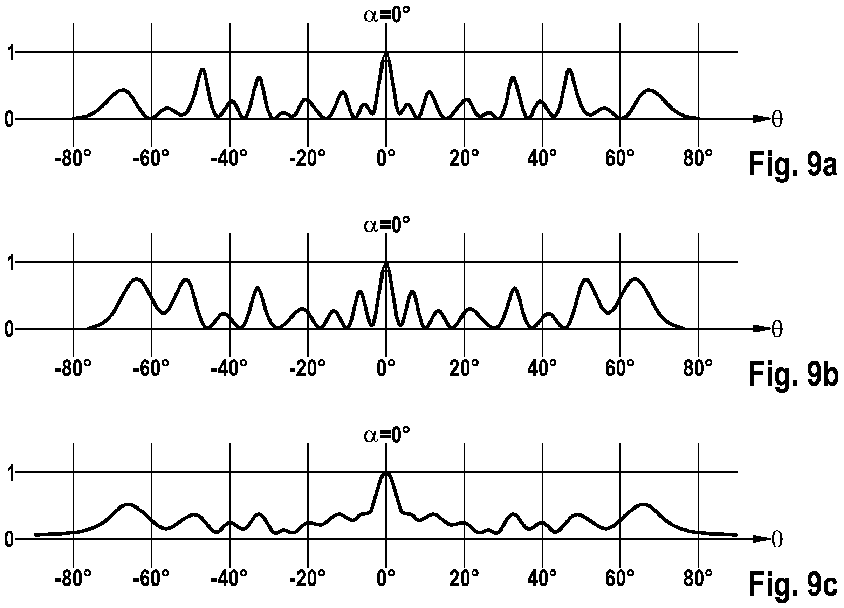

In Fig. 9 (a) und (b) sind Beispiele für diese beiden DML-Funktionen gezeigt, jeweils unter der Annahme, dass die Radarstrahlung frontal einfällt (tatsächlicher Einfallswinkel $\alpha = 0°$) und die empfangenen Signale unverrauscht sind. Das obere Diagramm (a) zeigt die DML-Funktion für die Perioden 2 und 4, und das Diagramm (b) die DML-Funktion für die Perioden 1 und 3. Wie zu erwarten haben diese Funktionen ein Hauptmaximum bei $\theta = 0$. Es treten jedoch auch Nebenmaxima bei anderen Winkeln auf.

Das Diagramm (c) in Fig. 9 zeigt die DML-Funktion, die einer Kombination (einer gewichteten Summe) der Diagramme (a) und (b) entspricht. In diesem Beispiel wird das Diagramm (a) doppelt gewichtet, weil in den zugehörigen Schaltzuständen jeweils mit zwei Antennenelementen (10 und 12 bzw. 14 und 16) gleichzeitig gesendet wird. Es sind jedoch auch andere Arten der Gewichtung sowie andere Formen der Kombination (z. B. Median) denkbar.

Man erkennt, dass in dieser Summe nur noch ein scharf ausgeprägtes Maximum bei $\theta = 0$ vorhanden ist, während die übrigen Maxima so weit unterdrückt sind, dass sie auch unter Berücksichtigung des Rauschens nicht den Wert 1 erreichen.

Für andere Werte des tatsächlichen Einfallswinkels $\alpha$ würde man andere (asymmetrische) DML-Funktionen erhalten, bei denen die Maxima an anderen Stellen liegen. Jede Funktion hätte dann ein Hauptmaximum an der Stelle $\theta = \alpha$.

**Patentansprüche**

1. Winkelauflösender FMCW-Radarsensor mit mehreren Antennenelementen (10, 12, 14, 16), die in einer Richtung, in welcher der Radarsensor winkelauflösend ist, in verschiedenen Positionen angeordnet sind und mindestens drei Sendearrays sowie mindestens ein Empfangsarray bilden, wobei ein Sendearray aus einem einzelnen Antennenelement oder aus einer Kombination mehrerer Antennenelemente bestehen kann, und mit einer Steuer- und Auswerteeinrichtung (30), die für eine Betriebsweise ausgelegt ist, bei der die mindestens drei Sendearrays periodisch Signale senden, deren Frequenz gemäß einer Folge von Modulationsrampen (44, 46; 52, 54) moduliert ist und bei der Radarechos der gesendeten Signale jeweils von mehreren Antennenelementen des mindestens einen Empfangsarrays empfangen werden und der Winkel ($\theta$) eines georteten Objekts anhand von Amplituden- und/oder Phasenbeziehungen zwischen Radarechos bestimmt wird, die unterschiedlichen Kombinationen von Sende- und Empfangsarrays entsprechen, **dadurch gekennzeichnet, dass** ein Messzyklus (P) des Radarsensors mindestens zwei Perioden (1, 2, 3, 4) umfasst, in denen jeweils zwischen mindestens zwei Kombinationen von Sende- und Empfangsarrays hin und in weiteren Perioden zurück gewechselt wird, und dass die beteiligten Kombinationen von Sende- und Empfangsarrays für die mindestens zwei Perioden voneinander verschieden sind.

2. Radarsensor nach Anspruch 1, bei dem jede Periode (1, 2, 3, 4) eine Folge von Modulationsrampen (44, 46; 52, 54) enthält und nach jeder einzelnen Modulationsrampe auf ein anderes Sendearray umgeschaltet wird.

3. Radarsensor nach Anspruch 1 oder 2, bei dem innerhalb einer einzelnen Periode (1, 2, 3, 4) abwechselnd zwischen zwei Sendearrays umgeschaltet wird.

4. Radarsensor nach einem der vorstehenden Ansprüche, bei dem mindestens eines der Sendearrays, das zum Senden in mindestens einer Periode (1, 3) verwendet wird, aus einem einzelnen Antennenelement (10; 16) besteht und mindestens ein anderes Sendearray, das zum Senden in mindestens einer Periode (2, 4) verwendet wird, aus mindestens zwei Antennenelementen (10, 12; 14, 16) besteht, die gleichzeitig mit frequenzgleichen Signalen gespeist werden.

5. Radarsensor nach einem der vorstehenden Ansprüche, bei dem jedes der Antennenelemente (10, 12, 14, 16) wahlweise als Teil eines Empfangsarrays und als Teil eines Sendearrays betreibbar ist.

**6.** Radarsensor nach einem der vorstehenden Ansprüche, bei dem die Antennenelemente (10, 12, 14, 16), die als Teil eines Sendearrays betreibbar sind, unterschiedliche Abstände von Nachbar zu Nachbar aufweisen.

**7.** Radarsensor nach einem der vorstehenden Ansprüche, bei dem zur Bestimmung des Abstands (D) eines georteten Objekts Unterschiede in den Phasenlagen von empfangenen Radarechos ausgewertet werden, die zu verschiedenen Modulationsmustern ($M_1$, $M_2$, $M_3$) gehören, und bei dem zur Identifizierung der Radarechos von mehreren gleichzeitig georteten Objekten die für mehrere aufeinanderfolgende Modulationsmuster erhaltenen Ergebnisse miteinander abgeglichen werden, wobei jeweils mindestens eines dieser Modulationsmuster aus einem vorangegangenen Messzyklus (P) stammt.

**Claims**

**1.** Angle-resolving FMCW radar sensor having a plurality of antenna elements (10, 12, 14, 16) which are arranged at different positions in a direction in which the radar sensor is angle-resolving and form at least three transmitting arrays and at least one receiving array, wherein a transmitting array can consist of an individual antenna element or of a combination of a plurality of antenna elements, and having a control and evaluation device (30) which is designed for a method of operation in which the at least three transmitting arrays periodically transmit signals, the frequency of which is modulated according to a sequence of modulation ramps (44, 46; 52, 54), and in which radar echoes of the transmitted signals are respectively received by a plurality of antenna elements in the at least one receiving array and the angle ($\theta$) of a located object is determined on the basis of amplitude and/or phase relationships between radar echoes corresponding to different combinations of transmitting and receiving arrays, **characterized in that** a measuring cycle (P) of the radar sensor comprises at least two periods (1, 2, 3, 4) in which there is respectively a change between at least two combinations of transmitting and receiving arrays and there is a change back in further periods, and **in that** the involved combinations of transmitting and receiving arrays differ from one another for the at least two periods.

**2.** Radar sensor according to Claim 1, in which each period (1, 2, 3, 4) contains a sequence of modulation ramps (44, 46; 52, 54) and there is a changeover to a different transmitting array after each individual modulation ramp.

**3.** Radar sensor according to Claim 1 or 2, in which there is alternately a changeover between two transmitting arrays within an individual period (1, 2, 3, 4) .

**4.** Radar sensor according to one of the preceding claims, in which at least one of the transmitting arrays which is used for transmission in at least one period (1, 3) consists of an individual antenna element (10; 16) and at least one other transmitting array which is used for transmission in at least one period (2, 4) consists of at least two antenna elements (10, 12; 14, 16) which are simultaneously fed with signals of the same frequency.

**5.** Radar sensor according to one of the preceding claims, in which each of the antenna elements (10, 12, 14, 16) can be optionally operated as part of a receiving array and as part of a transmitting array.

**6.** Radar sensor according to one of the preceding claims, in which the antenna elements (10, 12, 14, 16) which can be operated as part of a transmitting array have different distances from neighbour to neighbour.

**7.** Radar sensor according to one of the preceding claims, in which, in order to determine the distance (D) of a located object, differences in the phase angles of received radar echoes which belong to different modulation patterns ($M_1$, $M_2$, $M_3$) are evaluated, and in which, in order to identify the radar echoes of a plurality of simultaneously located objects, the results obtained for a plurality of successive modulation patterns are compared with one another, wherein at least one of these modulation patterns respectively comes from a preceding measuring cycle (P).

**Revendications**

**1.** Détecteur radar FMCW à résolution angulaire constitué de plusieurs éléments d'antenne (10, 12, 14, 16), disposés dans différentes positions dans une direction dans laquelle le détecteur radar possède une résolution angulaire, qui forment au moins trois réseaux émetteurs et au moins un réseau récepteur, dans lequel un réseau émetteur peut être constitué d'un seul élément d'antenne ou d'une combinaison de plusieurs éléments d'antenne, et comprend un dispositif de commande et d'évaluation (30) qui est conçu pour un mode de fonctionnement dans lequel lesdits au moins trois réseaux émetteurs émettent des signaux périodiques dont la fréquence est modulée selon une suite de rampes de modulation (44, 46 ; 52, 54) et dans lequel des échos radar des signaux émis sont reçus respectivement par plusieurs éléments d'antenne dudit au moins un réseau récepteur et l'angle (θ) d'un objet localisé est déterminé sur la base de relations d'amplitude et/ou de phase entre les échos radar correspondant à différentes combinaisons de réseaux émetteurs et récepteurs, **caractérisé en ce qu'**un cycle de mesure (P) du détecteur radar comprend au moins deux périodes (1, 2, 3, 4) dans lesquelles une permutation est effectuée entre au moins deux combinaisons de réseaux émetteurs et récepteurs et un retour est effectué au cours d'autres périodes, et **en ce que** les combinaisons de réseaux émetteurs et récepteurs concernées sont différentes les unes des autres pour lesdites au moins deux périodes.

2. Détecteur radar selon la revendication 1, dans lequel chaque période (1, 2, 3, 4) contient une série de rampes de modulation (44, 46 ; 52, 54) et est permutée après chaque rampe individuelle sur un réseau émetteur différent.

3. Détecteur radar selon la revendication 1 ou 2, dans lequel la permutation entre deux réseaux émetteurs est effectuée en alternance au cours d'une même période (1, 2, 3, 4) .

4. Détecteur radar selon l'une des revendications précédentes, dans lequel au moins l'un des réseaux émetteurs, qui est utilisé pour l'émission au cours d'au moins une période (1, 3), est constitué d'un élément antenne unique (10 ; 16), et au moins un autre réseau émetteur, qui est utilisé pour l'émission au cours d'au moins une période (2, 4), est constitué d'au moins deux éléments antenne (10, 12 ; 14, 16) qui sont alimentés simultanément avec des signaux de mêmes fréquences.

5. Détecteur radar selon l'une des revendications précédentes, dans lequel chacun des éléments d'antenne (10, 12, 14, 16) peut fonctionner sélectivement en tant que partie d'un réseau récepteur et en tant que partie d'un réseau émetteur.

6. Détecteur radar selon l'une des revendications précédentes, dans lequel les éléments d'antenne (10, 12, 14, 16) pouvant fonctionner en tant que partie d'un réseau émetteur présentent différents espacements de voisin à voisin.

7. Détecteur radar selon l'une des revendications précédentes, dans lequel, pour déterminer la distance (D) d'un objet localisé, on évalue les différences de position de phase des échos radar reçus qui appartiennent à des motifs de modulation différents ($M_1$, $M_2$, $M_3$) et dans lequel les résultats obtenus pour une pluralité de motifs de modulation successifs sont comparés les uns aux autres pour identifier les échos radar de plusieurs objets localisés simultanément, dans lequel au moins l'un desdits motifs de modulation provient d'un cycle de mesure précédent (P).

Fig. 1

Fig. 2

Fig. 3

Fig. 4

Fig. 5

EP 3 014 297 B1

Fig. 6

Fig. 7

Fig. 8

Fig. 9a

Fig. 9b

Fig. 9c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012041652 A1
- EP 2060929 A1
- EP 1486796 A2